Europäisches Patentamt

European Patent Office

Office européen des brevets

(19)

(11) Publication number: **0 489 440 A2**

# EUROPEAN PATENT APPLICATION

(21) Application number: **91120909.6**

(22) Date of filing: **05.12.91**

(51) Int. Cl.5: **B65B 31/00, G05D 16/06, G05D 23/02, G05D 27/00**

(30) Priority: **06.12.90 US 623004**

(43) Date of publication of application:
**10.06.92 Bulletin 92/24**

(84) Designated Contracting States:
**DE FR GB NL**

(71) Applicant: **LITTON SYSTEMS, INC.**
**2734 Hickory Grove Road**
**Davenport Iowa 52808(US)**

(72) Inventor: **Coffield, Kelly**
**4403 N. Thornwood Avenue**
**Davenport, Iowa 52806(US)**

(74) Representative: **TER MEER - MÜLLER - STEINMEISTER & PARTNER**
**Mauerkircherstrasse 45**
**W-8000 München 80(DE)**

(54) **Air management system for a controlled atmosphere container.**

(57) The air management system (10) for a controlled atmosphere container (25) comprises a compressor (14) providing a supply of compressed air through a line (16) to the input of a separator unit (26). A heat exchanger (17) is mounted along the line, and a duct directs a coolant across the heat exchanger (17). A thermal sensor (20) in the line controls the amount of coolant which flows through the duct to control the temperature of the compressed air in the line.

Fig_I

EP 0 489 440 A2

## BACKGROUND OF THE INVENTION

The invention relates to an air management system for a controlled atmosphere ("CA") container with integral discharge temperature and pressure control of air from a compressor.

CA containers for the post-harvest processing, transporting, and storage of agricultural commodities are known in the art. The use of such containers is well established for the storage and transport of certain products such as apples and is growing for others. CA containers provide a longer shelf life for fruits and vegetables than non-regulated containers and result in optimum freshness at the place of ultimate destination.

Typically, CA containers utilize an air separation unit to remove oxygen and other naturally occurring gases from ambient air to produce a supply of gas having a nitrogen concentration of up to 99.5 percent. Precise amounts of $O_2$ and $CO_2$ are added to the nitrogen atmosphere in the CA container to create ideal storage conditions for the foodstuffs contained therein.

Often the CA container is a mobile unit which is hauled by truck cab, rail, or ship from the place of harvest to the ultimate destination. During this time, the air separation unit continually supplies nitrogen to the interior of the CA container in order to displace naturally occurring atmospheric gases and other gases which are given off by the foodstuffs during the ripening process and to replace nitrogen which escapes through leakage from the container itself. The air separator may use either pressure swing adsorption or hollow fiber membrane technology in order to effect the necessary separation of nitrogen from the oxygen, carbon dioxide, and other constituents of atmospheric gas.

Separation units normally require an input of compressed air; and for this purpose, off-the-shelf industrial compressors are often used. Since the compressors heat the air during the compression process and the air separation units operate most efficiently with compressed air at a temperature which is lower than the normal outlet temperature from the compressor, a simple heat exchanger is used to remove excess heat from the compressed air stream. Such arrangements are satisfactory if the CA unit is in an atmosphere which is relatively stable. However, the CA container may begin its journey in the tropics and end in an ice bound North Sea harbor. Because of this, an unregulated heat exchanger may be insufficient to provide compressed air at the proper temperature to the concentrator unit in certain climates, and may result in freezing of the condensate in the compressed air stream in others.

Since the compressor runs constantly, air delivery from the compressor should be modulated in accordance with actual demand. The demand on the compressor varies if different separation modules are used with the same CA container, or if the RPM of the compressor changes in response to a frequency change in the electrical power running the compressor. As an example, switching power supplies from European to U.S. standards increases the frequency of the power by 20 percent, and compressor speed can increase by an equal amount.

There is, accordingly, a need in the art for an air management system for a CA container in which the temperature of the compressed air to the separator is controlled; and the pressure of air delivered to a compressor is regulated by compressor demand in order to provide optimum storage conditions in the container.

## SUMMARY AND OBJECTS OF THE INVENTION

According to the invention, the temperature and pressure of gas from a compressor are controlled to optimum values for use in a CA system.

A thermal sensor located within a compressed air line downstream of a heat exchanger senses the compressed air temperature and adjusts the flow of coolant across a heat exchanger in order to maintain the compressed air at the desired temperature. To conserve space, a pressure controller is combined with the intake air filter and manifold of the compressor. Air delivery from the compressor is modulated in accordance with the downstream demand and automatically compensates for different airflow requirements associated with different separation units or for RPM variations associated with frequency change in the electrical power source.

It is, accordingly, an object of the invention to provide an apparatus for controlling the cooling of a compressed air stream which is delivered by a compressor to an air separation unit.

It is another object of the invention to provide a pressure controller for an air compressor used in a CA system to modulate the air delivery from the compressor in accordance with the system demand.

These and other objects of the invention will be apparent from the following detailed description in which references numerals used throughout the description correspond to reference numerals used on the drawing figures.

## BRIEF DESCRIPTION OF THE DRAWINGS

Figure 1 is a schematic drawing showing the elements of the CA system according to the invention.

Figure 2 shows the pressure controller of the invention.

Figure 3 is an end view of the shrouded heat exchanger of the invention.

Figure 4 is a side sectional view of the shrouded heat exchanger of Figure 3.

Figure 5 shows a portion of the louver array used in the shrouded heat exchanger of Figure 3.

Figure 6 shows the thermal actuator used to control the heat exchanger of Figure 3.

## DESCRIPTION OF THE PREFERRED EMBODIMENT

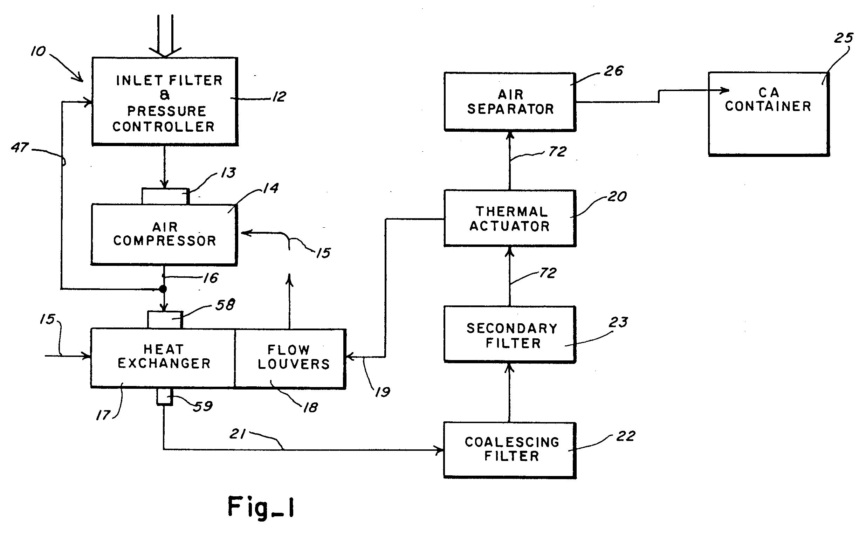

Figure 1 shows an air management system for a CA installation generally indicated by the reference numeral 10. Ambient air enters an inlet filter and pressure controller 12 which is coupled to the inlet 13 of an air compressor 14. The compressor 14 pressurizes the air to 100-125 psig (690-862 kPa) and delivers the same by means of an outlet line 16 to a heat exchanger 17 which may be mounted directly on an end of the compressor 14. The flow of cooling air 15 through the heat exchanger is regulated by flow louvers 18 the position of which is controlled by a cable linkage 19 coupled to a thermal actuator 20.

Cooled compressed air from the heat exchanger 17 is carried by a pressure line 21 to a coalescing filter 22 to remove excess moisture and to a secondary filter 23 for further purification. The dried and filtered air is routed past the thermal actuator 20 before delivery to an air separator 26. The air separator 26 may use any of the known air separation technologies such as molecular sieve but a hollow fiber membrane separator is preferred. Product gas from the separator 26 is delivered to the CA container 25.

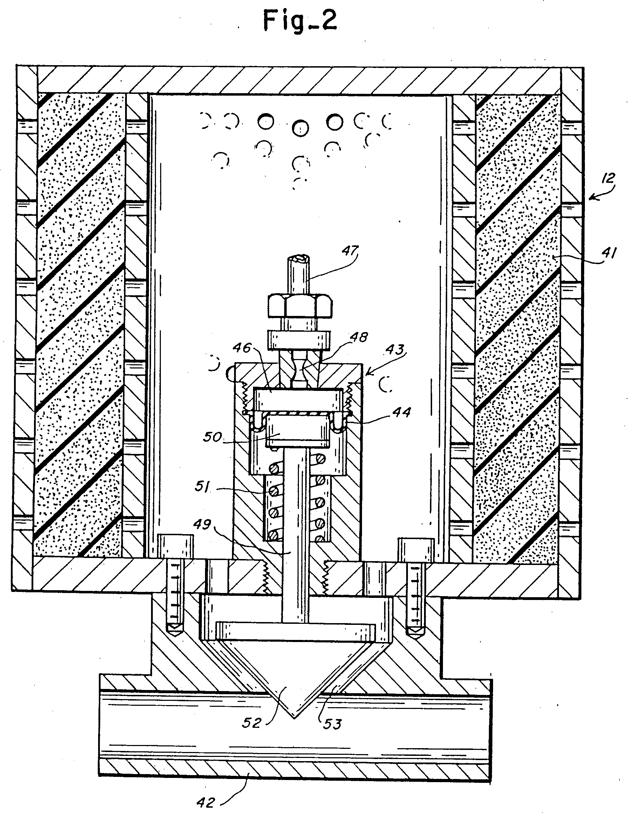

Figure 2 shows the pressure controller and inlet filter 12 of Figure 1 in greater detail. A filter element 41 is mounted on the intake manifold 42 of the compressor in order to conserve space. An air cylinder 43 includes a rolling diaphragm 44 which creates a control chamber 46 coupled to the compressor outlet line 16 by a sensing line 47. The sensing line 47 includes a flow restrictor 48 which dampens pressure pulsations occurring at the compressor outlet. Motion of the rolling diaphragm 44 drives a piston 50 and output shaft 49 against a return spring 51 to position a conical flow controller 52 located at the inlet port 53 of the intake manifold 42.

In operation, pressure in the compressor outlet line 16 is coupled to the control chamber 46 by the sensing line 47. Low pressure in the chamber 46 causes the flow controller 52 to be biased to the fully open position by the return spring 51. Increasing the pressure in the chamber 46 displaces the piston 50 and output shaft 49 against the spring to partially close the inlet port 53 with the flow controller 52. The pressure controller is calibrated so that maximum compressor outlet pressure will cause the flow controller 52 to completely close the inlet port 53. At the extreme condition of no air delivery (dead head), the system is unloaded by completely closing the inlet port, causing the compressor to expand and compress the same volume of air thus resulting in the compressor doing no net work.

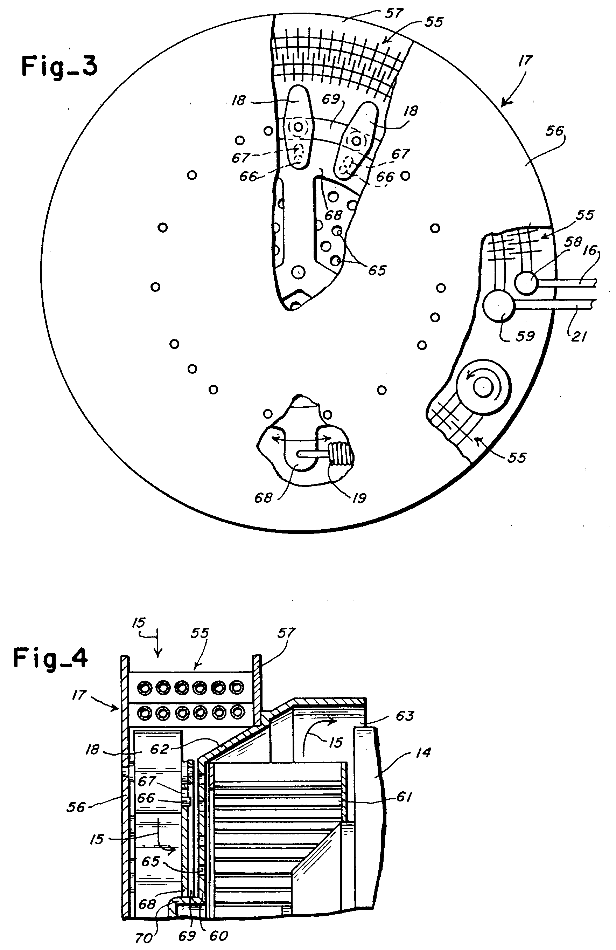

Figures 3-5 show the shrouded heat exchanger 17 used to cool the compressed air from the compressor 14 in greater detail. The temperature controlling scheme is particularly important in a mobile CA unit since most industrial air compressors have aftercoolers but make no effort to actively control the discharge temperature to prevent freezing of condensate and blockage of the compressor air lines when freezing ambient temperatures are encountered. In addition, the efficiency of air separators are affected to some degree by the temperature at which they operate; and normally, the discharge temperature of air from a compressor is higher than desired for efficient separation operation.

Referring to Figures 3-5, the heat exchanger 17 comprises finned heat exchange coil 55 which is mounted on one end of the air compressor 14 between a cap 56 and a mounting ring 57. The finned heat exchange coil 55 has an inlet 58 coupled to the outlet line 16 from the compressor and an outlet 59 coupled to the pressure line 21 attached to the coalescing filter 22. An apertured grid 60 in the end face of a motor shroud 62 allows air to be drawn by a fan wheel 61 across the finned heat exchange coil 55 and through the flow louvers 18 into the interior of the fan. The air is then blown by the fan 61 through the outlet passages 63 and across the air compressor 14. Air flow across the heat exchange coil 55 is controlled by adjusting the position of the circular array of pivoting flow louvers 18. The flow louvers are pivotally mounted between the cap 56 and a mounting ring 69 which is spaced from the cap by a series of standoffs 50. A link pin 66 on each louver 18 engages a slot 67 in a circular linkage 68 mounted on a projection 70 of the apertured grid 60. The position of the circular linkage 68 is controlled by the cable linkage 19 from the thermal actuator 20.

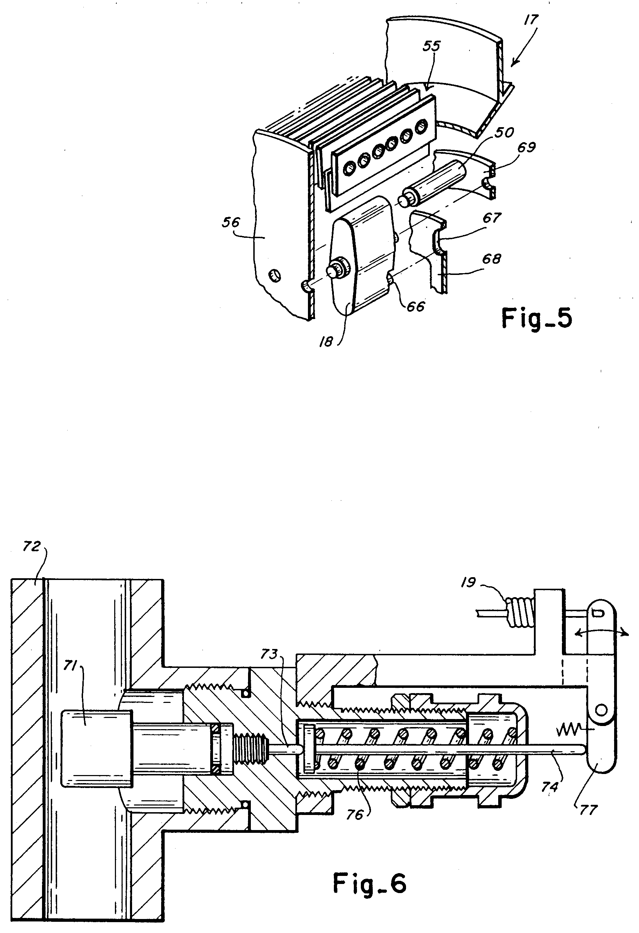

The thermal actuator 20 best seen in Figure 6 comprises a sensing element 71 which is located in the compressed air line 72 between the secondary air filter 23 and the air separator 26. The thermal actuator may be any commercial unit which provides a mechanical output; and in the preferred embodiment, the sensing element 71 contains a wax which changes state at a predetermined temperature. The change of state causes the wax to change its volume resulting in a linear displacement of a piston rod 73 and a displacer 74 which is biased by a return spring 76. A lever 77 amplifies the motion of the displacer and the amplified motion is coupled to one end of the cable linkage 19, the other end of which is coupled to the circular linkage 68. Movement of the circular linkage 68 causes the flow louvers 18 to pivot to a new position.

The temperature control system is calibrated so that the flow of compressed air in the line 72 at the desired temperature causes the flow louvers 18 to be half open. If the temperature of the compressed air in the line 72 drops, the louvers close, allowing less cooling air to be drawn across the heat exchange coil 55, causing the compressed air temperature to rise. Conversely, if the temperature of the air in the line 72 increases, the louvers open, allowing more cooling air to be drawn across the heat exchange coil 55, causing the compressed air temperature to drop. The system is thus self-regulating and will modulate the cooling of the compressed air in the heat exchange coil 55 to provide air to the separator 26 at the desired temperature. Locating the thermal actuator adjacent to the separator 26 automatically compensates for temperature loss in the compressed air stream through the filters 22 and 23 and the connecting air lines.

**Claims**

1. An air management system (10) for a controlled atmosphere container (25) having a source of nitrogen enriched product gas which is produced by a separator (26) in which the separator receives a supply of compressed air from a compressor (14), comprising:
   an air inlet (13) for the compressor (14);
   a movable flow controller (52) between the air inlet and the intake manifold (42) for the compressor (14); and
   an actuator means coupled (44, 49-51) to the flow controller for adjusting the position of the flow controller in response to the delivery pressure of the compressor.

2. The air management system of claim 1 further comprising:
   a sensing line (47) coupled between the compressor outlet and the actuator means, the sensing line comprising a pneumatic sensing line.

3. The air management system of claim 2 further comprising:
   an air cylinder (43) comprising the actuator means; and
   a flow restrictor (48) coupling the sensing line to the air cylinder whereby pressure pulsations in the sensing line are dampened before reaching the air cylinder.

4. The air management system of claim 3 further comprising:
   an inlet port (53) on the intake manifold (42) and a conical valve (52) comprising the flow controller wherein a pressure increase in the air cylinder (43) causes the conical valve to partially close the inlet port, thus reducing the flow of inlet air to the intake manifold in response to a pressure increase at the compressor outlet (16).

5. The air management system of claim 4 further comprising:
   an air filter (12) for the compressor air inlet, whereby the air cylinder (43) is located within the air filter.

6. An air management system (10) for a controlled atmosphere container (25) having a source of nitrogen enriched product gas which is produced by an air separator (26) in which the separator receives a supply of compressed air from a compressor (14), comprising:
   a heat exchange coil (55);
   a fan (61) for drawing cooling air across the heat exchange coil;
   flow regulator means (18) for regulating the amount of air drawn across the heat exchange coil;
   a coil inlet (58) for admitting compressed air to the heat exchange coil; and
   a coil outlet (16) for ducting compressed air from the heat exchange coil to a downstream air separator (26).

7. The air management system of claim 6 further comprising:
   a thermal actuator (20) in the compressed air line (72) between the coil outlet and the air separator; and
   linkage means (19) coupling the output of the thermal actuator to the flow regulator means (18) for adjusting the amount of air drawn across the heat exchange coil.

8. The air management system of claim 7 further comprising:
   a circular array of flow louvers (18) comprising the flow regulator means; and
   a fan wheel comprising the fan, wherein the circular array of flow louvers is located between the heat exchange coil and the fan wheel.

9. The air management system of claim 8 wherein the coil housing is mounted on the air compressor and the thermal actuator is mounted adjacent the air separator.

10. The air management system of claim 9 wherein an increase in delivery temperature of compressed air to the separator causes the flow louvers to move to a position which allows more cooling air to flow across the heat exchange coil.

11. An air management system (10) for a controlled atmosphere container (25) which receives product gas from a separator (26) coupled to the outlet of a compressor, comprising:
a pressure controller (12) for controlling delivery pressure from the compressor in accordance with the downstream demand; and
a temperature controller (20) for controlling the delivery of compressed air to the separator in accordance with the sensed compressed air temperature at the separator inlet.

Fig-1

# Fig_2

Fig_3

Fig_4

Fig_5

Fig_6